# EUROPÄISCHE PATENTSCHRIFT

(11) **EP 1 938 001 B1**
(45) Veröffentlichungstag und Bekanntmachung des Hinweises auf die Patenterteilung: **09.03.2011**
(21) Anmeldenummer: 06792339.1
(22) Anmeldetag: 30.09.2006
(51) Int. Cl.: F16H 61/02, F16H 59/14, F16H 59/66, F16H 59/52

(54) **VERFAHREN ZUR BEEINFLUSSUNG EINES AUTOMATISIERTEN SCHALTGETRIEBES UNTER BERÜCKISICHTIGUNG DES FAHRWIDERSTANDES**
METHOD FOR INFLUENCING AN AUTOMATIC GEARBOX, TAKING INTO CONSIDERATION THE TRACTIONAL RESISTANCE
PROCEDE POUR INFLUER SUR UNE BOITE DE VITESSES SEMI-AUTOMATIQUE EN FONCTION DE LA RESISTANCE A L'AVANCEMENT

(30) Priorität: 18.10.2005 DE 102005049710
(43) Veröffentlichungstag der Anmeldung: 02.07.2008
(73) Patentinhaber: ZF Friedrichshafen AG, 88038 Friedrichshafen (DE)
(72) Erfinder: EISELE, Markus, 88048 Friedrichshafen (DE); NOLZEN, Harry, 88069 Tettnang (DE); BLASER, Juergen, 88074 Meckenbeuren (DE); ADAMS, Harm, 88045 Friedrichshafen (DE)
(86) Internationale Anmeldenummer: PCT/EP2006/009514
(87) Internationale Veröffentlichungsnummer: WO 2007/045344

(56) Entgegenhaltungen:
- EP-A- 0 377 953
- EP-A- 0 503 948
- EP-A- 0 752 548
- EP-A- 1 158 220
- WO-A-02/055909
- DE-A1- 10 235 969
- DE-A1- 10 260 007

## Beschreibung

Die Erfindung betrifft ein Verfahren zur Beeinflussung eines automatisierten Schaltgetriebes unter Berücksichtigung des Fahrwiderstandes gemäß dem Oberbegriff des Patentanspruchs 1, wie aus der EP 503948A bekannt.

Automatisierte Schaltgetriebe werden seit geraumer Zeit in Form von Stufenschaltgetrieben und ungestuften bzw. stufenlos-variablen Getrieben in unterschiedlichen Kraftfahrzeugtypen genutzt. Dabei ist es üblich, dass eine Automatik in Abhängigkeit des Betriebspunktes des Antriebsmotors, zum Beispiel durch die Drehzahl und das abgegebene Drehmoment des Antriebsmotors definiert, den jeweils zu aktivierenden Gang bestimmt.

In der Praxis werden zur besseren Abstimmung der Getriebeautomatik zum Teil weitere Parameter mit herangezogen. Durch die Berücksichtigung der Getriebe- und Antriebsmotortemperatur kann beispielsweise eine vergrößerte innere Reibung in Folge kalten Motor- und/oder Getriebeöls berücksichtigt und/oder es können hohe Drehzahlen des Antriebsmotors durch frühzeitiges Schalten in einen höheren Fahrgang vermieden werden. Wenn eine Präferenz des Fahrers für einen ökonomischen oder sportlichen Fahrstil ermittelt oder abgefragt wird, können die Schaltpunkte, an denen ein Gangwechsel bzw. allgemein eine Änderung des Getriebeübersetzungsverhältnisses vorgenommen wird, so verändert werden, dass zum Beispiel bei höheren bzw. niedrigeren Motordrehzahlen ein Schaltbefehl ausgelöst wird.

Diese Schaltpunkte können im einfachsten Fall in Form einer Tabelle oder einem Kennfeld in einem elektronischen Speicherbaustein eines Steuergerätes gespeichert sein, mittels derer jedem Betriebspunkt des Antriebsmotors in Verbindung mit der bekannten Fahrgeschwindigkeit des Fahrzeugs ein Zielgang zugeordnet wird, wobei gegebenenfalls weitere Parameter durch eine Vergrößerung bzw. Verringerung dieser Werte berücksichtigt werden können. Um ein so genanntes Schaltpendeln zu vermeiden, werden dabei der Schaltpunkt für den Wechsel in einen höheren Gang und der Schaltpunkt für den Wechsel in den zuvor aktiven niedrigeren Gang unterschiedlichen Motorbetriebspunkten zugeordnet.

Derartige Getriebesteuerungen müssen so ausgelegt sein, dass der Antriebsmotor auch an einer starken Steigung und gegebenenfalls einem bis an die zulässige Grenze beladenem Fahrzeug sowie kaltem Motor und Getriebe nach einem Gangwechsel ein genügend großes Drehmoment zur Verfügung stellen kann, um die Geschwindigkeit des Fahrzeugs bei der gewählten Getriebeübersetzung und der gegebenen Fahrgeschwindigkeit zumindest konstant zu halten. Andernfalls käme es nach einem Schaltvorgang bzw. nach einer Änderung des Übersetzungsverhältnisses zu einer ungewollten Verzögerung des Fahrzeugs. Ohne die Berücksichtigung weiterer Parameter ist eine Getriebesteuerung daher so auszulegen, dass bei einem Beschleunigungsvorgang des Fahrzeugs jeweils relativ spät in den nächst höheren Gang geschaltet wird. Dies führt zu einem unnötig hohen Kraftstoffverbrauch, verstärkter Abnutzung an Motor und Getriebe sowie erhöhten Geräuschemissionen.

Um einerseits einen sicheren und komfortablen Betrieb des Fahrzeugs auch an starken Steigungen sicherzustellen und andererseits die Auswirkungen der beschriebenen Nachteile zu verringern ist es bereits bekannt, unterschiedliche Schaltprogramme für das automatisierte Schaltgetriebe vorzusehen bzw. das Schaltprogramm zu adaptieren oder zu verändern, um den Anforderungen an Beschleunigungsfähigkeit, Kraftstoffverbrauch und Lärmemissionen bei unterschiedlichen äußeren Bedingungen zu genügen. Im einfachsten Fall können hier zwei alternativ vom Fahrer auswählbare Schaltprogramme vorhanden sein, von denen eines für steile Bergauffahrten und das andere für Fahrten in der Ebene oder im Gefälle optimiert ist. Selbstverständlich können weitere Schaltprogramme beispielsweise für Fahrten im Gefälle oder für unterschiedliche durchschnittliche oder maximale Steigungen ausgelegt und aktivierbar sein. Problematisch ist hier allerdings die zusätzliche Arbeitsbelastung für den Fahrer, der zusätzlich das befahrene Gelände einschätzen und ein geeignetes Schaltprogramm auswählen muss, was in der Praxis in der Regel unterbleiben dürfte oder zumindest häufig zur Auswahl eines nicht optimalen Schaltprogramm führt.

Aus der DE 196 00 734 C2 ist ein Verfahren zur Steuerung von Aggregaten und/oder Systemen eines Kraftfahrzeugs bekannt, bei dem grundsätzlich drei Datenarten wie folgt unterschieden werden:
- Aktuelle Daten zur Positionsbestimmung, welche mittels Telekommunikationssystemen übertragbar sind, beispielsweise GPS-Daten,
- im Fahrzeug mitgeführte, statische Daten, in Form von digitalisierten Straßendaten und
- vom Fahrer-Fahrzeugsystem abgeleitete Daten, wie Querbeschleunigung, Raddrehzahldifferenzen, Gierwinkel und Fahrtrichtung.

Zumindest zwei dieser Datenarten werden zu einer Stellgröße für die Getriebesteuerung aufbereitet. Insbesondere wird mit Hilfe der aktuellen Daten und der statischen Daten ermittelt, in welcher Fahrumgebung (Stadt, Land, Autobahn, Ebene, Bergprogramm) sich das Fahrzeug befindet und das Schaltprogramm eines gestuften oder stufenlosen automatischen Getriebes eines Kraftfahrzeugs entsprechend adaptiert und/oder aktiviert und/oder variiert. Zusätzlich können weitere Daten mit verwendet und/oder weitere Systeme des Fahrzeugs angesteuert werden.

Dieser Ansatz ermöglicht eine sehr genaue und zielgerichtete Beeinflussung der Schaltpunkte bzw. des Schaltprogramms eines automatischen Getriebes. Allerdings werden hierfür zumindest aktuelle Daten (Positionsdaten, z.B. mit Hilfe eines GPS-Systems) oder im Fahrzeug mitgeführte, digitalisierte Straßenkarten und bevorzugt beide Datenarten benötigt.

Dies ist in der praktischen Umsetzung mit verschiedenen Problemen verbunden, die z.B. die elektrische und signaltechnische Ankopplung eines GPS-Sensors mit entsprechender Auswertungselektronik und den damit verbundenen Verkabelungsaufwand einerseits und die Notwendigkeit des Mitführens aktueller Straßenkarten des bereisten Gebietes andererseits betreffen. Zwar werden zunehmend Navigationssysteme in Fahrzeugen verbaut, die beide Datenarten beinhalten. Es ist jedoch mit erheblichem Aufwand verbunden, die Kompatibilität einer Getriebesteuerung zu einer großen Zahl von auf dem Markt befindlichen Navigationssystemen mit unterschiedlichen Ausgabeformaten und Protokollen sicherzustellen. Zudem sollte eine Getriebesteuerung auch ohne ein funktionierendes und aktives Navigationssystem voll funktionsfähig sein.

Vor diesem Hintergrund liegt der Erfindung die Aufgabe zugrunde, ein Verfahren zur Beeinflussung eines automatisierten Schaltgetriebes vorzustellen, mit dem auf einfache Weise und ohne die Notwendigkeit eines Datenaustauschs mit fahrzeugexternen Einrichtungen sowie unabhängig von einer digitalisierten Straßenkarte des befahrenen Gebietes mit geringem baulichem Aufwand die Größe eines externen Fahrwiderstandes ermittelt werden kann. Insbesondere soll eine Topographieinformation des befahrenen Gebietes gewonnen werden, die gegebenenfalls in Kombination mit weiteren Einflussgrößen in Bezug auf den externen Fahrwiderstand einer Fahrwiderstanderkennungseinrichtung in der Art auf die Steuerung eines automatisierten Getriebes einzuwirken erlaubt, dass durch eine Verschiebung von Schaltpunkten oder eine Auswahl eines geeigneten Schaltprogramms sowohl der Kraftstoffverbrauch als auch die Schadstoff- und Lärmemissionen verringert werden. Weiter sollen auch der Fahrkomfort und die Steigungsfähigkeit des Fahrzeugs verbessert werden.

Die Lösung dieser Aufgabe ergibt sich aus den Merkmalen des Hauptansprüchs, während vorteilhafte Ausgestaltungen und Weiterbildungen der Erfindung den Unteransprüchen entnehmbar sind.

Der Erfindung liegt die Erkenntnis zugrunde, dass sich die vorstehend genannten Ziele auf besonders einfache und effiziente Weise erreichen lassen, wenn der externe Fahrwiderstand aus im Fahrzeug vorhandenen beziehungsweise leicht ermittelbaren Zustandsdaten ermittelt wird. Aufwändige Datenanbindungen an Navigationssysteme, Positionsermittlungssysteme und Straßenkarten-Auswertungssysteme können auf diese Weise ebenso entfallen wie eine Verwendung von spezialisierten Sensoren.

Demnach geht die Erfindung von einem Verfahren zur Beeinflussung eines automatisierten Schaltgetriebes eines Kraftfahrzeugs aus, bei welchem eine Fahrwiderstanderkennungseinrichtung einen externen Fahrwiderstand des Fahrzeugs ermittelt und in Abhängigkeit von diesem externen Fahrwiderstand ein Schaltprogramm des automatisierten Schaltgetriebes durch Aktivierung und/oder Adaptierung und/oder Variierung beeinflusst.

Dabei werden unter automatisierten Schaltgetrieben neben gestuften Getrieben mit diskreten Übersetzungsverhältnissen auch solche Getriebe verstanden, die eine stufenlos-variable Änderung des Übersetzungsverhältnisses ermöglichen. Das Fahrzeug kann ein beliebiges, motorgetriebenes Landfahrzeug sein, wobei beispielsweise Ackerschlepper oder selbstfahrende Arbeitsmaschinen ausdrücklich mit eingeschlossen werden.
Zur Lösung der gestellten Aufgabe ist vorgesehen, dass die Fahrwiderstanderkennungseinrichtung Daten einliest, welche zumindest Informationen über ein Antriebsmoment im Antriebsstrang, über eine zugehörige Drehzahl und über eine Beschleunigung des Fahrzeugs beinhalten.

Weiterhin können beispielsweise Getriebeübersetzung, Achsübersetzung und Radradius erfaßt werden.

Die Informationen über das Antriebsmoment im Antriebsstrang können an beliebiger geeigneter Stelle des Antriebsstranges, etwa an einer Getriebe- oder Achswelle ermittelt werden. Besonders einfach ist jedoch die Auswertung der zumeist ohnehin vorhandenen Daten eines Motorsteuergerätes des Antriebsmotors des Fahrzeugs, die zumindest unter Zuhilfenahme von Berechnungsvorschriften oder Kennfeldern eine recht genaue Ermittlung des an der Kupplungsplatte anliegenden Drehmomentes des Antriebsmotors ermöglichen.

Grundsätzlich ist es unerheblich, für welche Stelle des Antriebsstranges die Werte des Antriebsmomentes normiert werden. Es bietet sich jedoch aus Gründen der einfachen Nachvollziehbarkeit für die weiteren Ausführungen an, die angetriebene Achse beziehungsweise die angetriebenen Räder als Referenzpunkt zu definieren und die ermittelten Werte des anliegenden Drehmomentes und der Drehzahl mittels der bekannten geometrischen Verhältnisse auf diesen Referenzpunkt zu normieren. Für die weiteren Erläuterungen soll daher von diesem Antriebsdrehmoment an den angetriebenen Rädern ausgegangen werden, wobei selbstverständlich bei mehreren angetriebenen Rädern oder Achsen jeweils das Gesamtantriebsmoment gemeint ist.

Aus dem Antriebsmoment im Antriebsstrang und der zugehörige Drehzahl lässt sich auf einfache Weise die momentan an dieser Stelle zur Verfügung stehende Antriebsleistung ermitteln. Mit Hilfe der Daten über die Beschleunigung des Fahrzeugs, die sich leicht beispielsweise aus dem zeitlichen Verlauf der Fahrzeuggeschwindigkeit ermitteln lassen, schließt die Fahrwiderstanderkennungseinrichtung durch einfache Berechnungen oder auch Tabellen auf den externen Fahrwiderstand des Fahrzeugs.

Unter dem externen Fahrwiderstand des Fahrzeugs wird dabei zunächst die Summe der Widerstände verstanden, welche dem Vortrieb des Fahrzeugs ab dem Referenzpunkt für das Antriebsmoment im Antriebsstrang entgegenstehen.

Dies können unter anderem durch Luftwiderstand und Rollreibung bedingte Widerstände sein. Abhängig von der Lage des Referenzpunktes für das Antriebsmoment im Antriebsstrang können jedoch auch Schleppmomente durch weitere Komponenten, Aggregate und Module des Fahrzeugs zu den externen Fahrwiderständen zählen. Sofern daher beispielsweise Daten über Drehmoment und Drehzahl an der angetriebenen Achse ohnehin vorliegen, zählen beispielsweise durch Klimaaggregate, Pumpen oder Retarder aufgebrachte Schleppmomente zu den internen Widerständen und brauchen nicht gesondert berücksichtigt zu werden. Wenn jedoch das Antriebsmoment ausgehend von Motordaten des Antriebsmotors ermittelt wird, kann eine besondere Berücksichtigung dieser Schleppmomente sinnvoll sein. Der in diesem Zusammenhang wichtigste externe Fahrwiderstand ergibt sich jedoch aus der zu befahrenden Steigung der Fahrbahn, und genauer aus der Kombination von Steigung, Fahrgeschwindigkeit und Gesamtgewicht des Fahrzeugs.

Bei konstanter Geschwindigkeit ist die Summe der internen und externen Widerstände gleich der Antriebsleistung. Ist letztere größer als der interne und externe Fahrwiderstand, so bewirkt der Überschuss eine Beschleunigung des Fahrzeugs. Auf diese Weise kann die Fahrwiderstandermittlungseinrichtung ausgehend von ohnehin im Fahrzeug vorhandenen oder leicht und mit üblichen Sensoren ermittelbaren Zustandsdaten des Fahrzeugs auf die Steigung der aktuell befahrenen Wegstrecke schließen.

Aufgrund der aktuellen oder statistisch aufbereiten Daten über den externen Fahrwiderstand des Fahrzeugs kann die Fahrwiderstandermittlungseinrichtung das Schaltprogramm des automatisierten Schaltgetriebes somit durch Aktivierung und/oder Adaptierung und/oder Variierung in der Art beeinflussen, dass beispielsweise in einem Gebiet mit starken Steigungen - und damit mit einem hohem externen Fahrwiderstand - ein Schaltprogramm gewählt wird, welches relativ hohe Schaltpunkte aufweist, also erst bei relativ hohen Motordrehzahlen in den nächst höheren Fahrgang schaltet.

Andererseits kann bei Fahrten in ebenem Gelände ein Schaltprogramm aktiviert oder entsprechend variiert werden, das einen frühzeitigen Fahrgangwechsel bei einer Beschleunigung veranlasst, wodurch in erheblichem Maße Kraftstoff eingespart werden kann.

Im Rahmen dieser Erfindung ist es zunächst unerheblich, ob die beschriebene Anpassung des Schaltprogramms durch Auswahl aus einer Anzahl unterschiedlicher Programme, Tabellen bzw. Kennfelder oder durch eine Gewichtung mittels variabler Faktoren realisiert wird. Auch ist neben dem beschriebenen Fall einer bloßen Unterscheidung zwischen einer Fahrt am Berg und in der Ebene eine Vielzahl genauerer oder eine kontinuierliche Abstufung denkbar. In einer weiteren Ausführung kann zwischen einer Fahrt in der Ebene, einer stetigen Bergauffahrt und einer Fahrt in bergigem Gelände mit abwechselnden Steigungs- und Gefällestecken unterschieden werden.

Im einfachsten unter diese Erfindung zu fassenden Fall kann sogar nur ein einziges Schaltprogramm für die Steuerung des automatisierten Getriebes vorhanden sein, sofern der Hersteller oder eine Werkstatt aufgrund von mit anderen Fahrzeugen auf die vorstehend beschriebene Weise ermittelten Messwerten aus einer Mehrzahl von Schaltprogrammen oder Parametereinstellungen ein jeweils optimales Schaltprogramm oder eine optimale Parametereinstellung auswählt. In sofern lassen sich die mit einem oder wenigen Fahrzeugen ermittelten Werte auf eine Fahrzeugflotte übertragen, sofern das einzelne Fahrzeug stets unter gleichen oder ähnlichen Bedingungen, insbesondere stets in annähernd gleichem Gelände fährt.

Es ist beispielsweise denkbar, dass aus einem Fuhrpark annähernd baugleicher städtischer Linienbusse nur ein Bus wie vorstehend beschrieben ausgerüstet wird, der nun im Alltagsbetrieb nach einander auf verschiedenen Linien eingesetzt wird und so die optimalen Parameter für ein Schaltprogramm einer Getriebesteuerung ermittelt. Diese Parameter können dann jeweils ausgelesen und in die Getriebesteuerungen der gewöhnlich auf dieser Linie eingesetzten Busse übertragen werden.

Es sei hier darauf hingewiesen, dass ein hoher externer Fahrwiderstand mit den beschriebenen Mitteln selbstverständlich nur schwer eindeutig auf eine starke Steigung zurückzuführen ist. Beispielsweise ähneln sich die von der Fahrwiderstandermittlungseinrichtung erfassten Daten bei einem Fahrzeug an einer starken Steigung ohne Anhänger, an einer geringeren Steigung mit einem schweren Anhänger und auf einer ebenen Strecke bei einem konstanten und sehr starken Gegenwind und beispielsweise einem Wohnanhänger. Allerdings kann durch eine Auswertung der zeitlichen Verläufe des externen Fahrwiderstandes durchaus zumindest teilweise zwischen diesen Fällen unterschieden werden, da beispielsweise ein durch starken Wind und einen großen Luftwiderstand verursachter Fahrwiderstand in der Regel aufgrund von Böen und Windschatten ein stark variierendes Profil über die Zeit aufweist, während ein erheblicher Unterschied im Gesamtgewicht des Fahrzeugs aufgrund der vergrößerten Massenträgheit zu einem charakteristischem Verlauf bei Beschleunigungsvorgängen führt. Wichtiger als die zweifelsfreie Erklärung der Ursachen des externen Fahrwiderstandes ist jedoch, dass auch ohne dies eine sinnvolle Beeinflussung des Schaltprogramms durch die Fahrwiderstandserkennungsvorrichtung möglich ist. In allen drei vorstehend genannten Beispielen ist eine Anhebung der Schaltpunkte angebracht.

Während in einer Grundform der Erfindung lediglich der externe Fahrwiderstand als Gesamtwert ermittelt wird, ermittelt die Fahrwiderstanderkennungseinrichtung in einer bevorzugten Ausführungsform der Erfindung den externen Fahrwiderstand unter Berücksichtigung zusätzlicher Parameter, wodurch, nicht nur eine noch genauere Abstimmung der Beeinflussung des automatisierten Schaltgetriebes möglich wird, sondern auch die topographischen Eigenschaften des befahrenen Gebietes genauer ermittelbar sind.

Insbesondere ist es vorteilhaft, wenn die Fahrwiderstanderkennungseinrichtung den externen Fahrwiderstand unter Berücksichtigung des Rollwiderstandes des Fahrzeugs ermittelt. Da der Rollwiderstand über Zeit und Fahrstrecke meist weitgehend konstant ist beziehungsweise nach einem zeitlich konstanten Profil von der Fahrgeschwindigkeit und eventuell weiteren Faktoren abhängig ist, kann auf diese Weise etwa die Genauigkeit der Ermittlung der Steigung des Untergrundes verbessert werden. Im einfachsten Fall kann ein konstanter Wert und ein konstanter Faktor mit der Fahrtgeschwindigkeit verknüpft werden und der so ermittelte Rollwiderstand mittels einfacher Umrechnung vom Antriebsmoment am Referenzpunkt abgezogen werden. Der Rollwiderstand wird so durch einfache Berechungen zu einer bekannten Größe, die im Weiteren nicht mehr berücksichtigt zu werden braucht.

Selbstverständlich sind auch sehr viel exaktere und komplizierter Verfahren zur Berechnung oder auch Messung des Rollwiderstandes und die Einbeziehung einer Vielzahl weiterer Parameter wie Luftdruck, Untergrund, Reifenmodell und Temperatur oder die Ermittlung eines Profils am jeweiligen Fahrzeug, beispielsweise bei konstanter Geschwindigkeit auf ebener Strecke möglich.

Ähnliches gilt für die Berücksichtigung des Luftwiderstandes des Fahrzeugs bei der Ermittlung des externen Fahrwiderstandes durch die Fahrwiderstanderkennungseinrichtung. Der Luftwiderstand hängt in erster Linie von der Fahrzeuggeschwindigkeit der Angriffsfläche und dem Luftwiderstandsbeiwert (CW-Beiwert) des Fahrzeugs ab und kann damit einfach abgeschätzt sowie analog zu dem vorstehend gesagten ebenfalls zu einer bekannten Größe umgewandelt werden. Selbstverständlich sind auch hier beliebig genaue und/oder aufwändige Methoden der Ermittlung des Luftwiderstandes möglich. Bei geringen Geschwindigkeiten kann der Luftwiderstand auch gänzlich unberücksichtigt bleiben, ohne einen zu großen Berechnungsfehler zu erhalten.

Des Weiteren hängt der externe Fahrwiderstand zu einem gewissen Grad von der Masse beziehungsweise dem Gewicht des Fahrzeugs ab. Einerseits steigt mit zunehmendem Gewicht der Rollwiderstand, wobei dieser Effekt wahlweise bereits bei dessen Berücksichtigung mit eingerechnet werden kann. Andererseits gewinnt ein schwereres Fahrzeug beim Befahren einer Steigung mehr Lageenergie. Zudem wirkt sich die so genannte träge Masse des Fahrzeug bei Bescheunigungsvorgängen aus, welches sich unter ansonsten gleichen Bedingungen in einer geringeren Beschleunigung oder Beschleunigungsfähigkeit am Hang beziehungsweise in einem größeren, durch die Steigung bedingten, externen Fahrwiderstand niederschlägt. Es ist aufgrund dieser vielfältigen Einflussnahme des Gesamtgewichtes des Fahrzeugs besonders vorteilhaft, die Fahrzeugmasse bei der Ermittlung des externen Fahrwiderstandes zu berücksichtigen.

Dies ist gerade bei Personenkraftwagen und Omnibussen besonders leicht möglich, da aufgrund des relativ hohen Anteils des betriebsfähigen Fahrzeugs am Gesamtgewicht die Schwankungen durch wechselnde Zuladung beziehungsweise wechselnde Insassenzahl relativ gering sind. Bevorzugt kann die Fahrwiderstanderkennungseinrichtung deshalb den externen Fahrwiderstand unter Berücksichtigung eines angenommenen mittleren Gesamtgewichtes des Fahrzeugs ermitteln, das beispielsweise aus der Summe vom Leergewicht plus der halben zulässigen Zuladung oder durch die Gleichung Leergewicht plus zulässiges Gesamtgewicht durch Zwei angenähert bestimmt werden kann. Natürlich ist auch eine Abschätzung der mittleren Zuladung anhand von statistischen Daten etwa über die Auslastung einzelner Buslinien denkbar.

Noch genauere Ergebnisse erhält man allerdings, wenn die Fahrwiderstanderkennungseinrichtung den externen Fahrwiderstand unter Berücksichtigung des tatsächlichen Gesamtgewichtes des Fahrzeugs ermittelt.

Wie bereits erwähnt wurde, wird hier unter dem externen Fahrwiderstand des Fahrzeugs zunächst die Summe der Widerstände verstanden, welche dem Vortrieb des Fahrzeugs ab dem Referenzpunkt für das Antriebsmoment im Antriebsstrang entgegenstehen. Da es zumeist besonders einfach ist, die ohnehin vorhandenen Daten eines Motorsteuergerätes des Antriebsmotors zu verwenden, liegt der Referenzpunkt ohne weitere Korrekturen in diesem Fall an der Ausgangswelle des Motors. Natürlich ist es für die Auswahl oder Variation eines Schaltprogramms für ein Automatikgetriebe nicht gleichgültig, ob der Antriebsmotor zugleich noch eine erhebliche Leistung an antreibbare Pumpen, Klimaanlagen, Retarder oder anderer Elemente, Komponenten oder Aggregate abgibt, da diese die für den Vortrieb des Fahrzeugs zur Verfügung stehende Leistung verringern. Genauere Ergebnisse in Bezug auf zum Beispiel die Steigung einer befahrenen Strecke lassen sich daher erhalten, wenn die Fahrwiderstanderkennungseinrichtung den externen Fahrwiderstand unter Berücksichtigung von internen Widerständen ermittelt, welche ein tatsächlich an den Rädern des Fahrzeugs anliegendes Antriebsmoment gegenüber dem aufgrund der eingelesenen Informationen über das Antriebsmoment im Antriebsstrang zu erwartenden Antriebsmoment verringern.

Wenn die Fahrwiderstandserkennungsvorrichtung eine durch Zusatzaggregate bedingte Verringerung des tatsächlich an den Rädern des Fahrzeugs anliegendes Antriebsmomentes berücksichtigt, hat dies zudem den Vorteil, dass zeitliche Unterschiede in der Leistungsaufnahme dieser Zusatzaggregate getrennt von den verbleibenden Leistungssenken erfasst werden können.

Vereinfacht ausgedrückt wird ohne diese Berücksichtigung bei einem Anspringen einer leistungsstarken Klimaanlage von der Fahrwiderstandserkennungsvorrichtung auf einen erheblichen Anstieg der externen Fahrwiderstände geschlossen und beispielsweise das Schaltprogramm so modifiziert, dass erst bei relativ hohen Drehzahlen in den nächsten Gang geschaltet wird. Mit der Berücksichtigung des Zusatzaggregates Klimaanlage gemäß den vorstehenden Ausführungen stellt die Fahrwiderstandserkennungsvorrichtung dagegen einen Einbruch der vom Antriebsmotor bereitgestellten oder bereitstellbaren Leistung bei unverändertem externem Fahrwiderstand fest. Die Auswirkungen auf das Schaltprogramm können bei entsprechender Auslegung der Fahrwiderstandserkennungsvorrichtung identisch sein. Die Größe des von der Fahrwiderstandserkennungsvorrichtung ermittelten externen Fahrwiderstandes entspricht bei getrennter Erfassung jedoch weitaus genauer der Steigung und ist damit erheblich stärker mit der tatsächlichen Topographie der befahrenen Strecke verknüpft.

Wenn die Fahrwiderstanderkennungseinrichtung alternativ oder zusätzlich die durch einen automatischen und/oder manuellen Bremseingriff bedingte Verringerung des tatsächlich an den Rädern des Fahrzeugs anliegenden Antriebsmomentes berücksichtigt, ergibt sich ein besonders genau der Topographie entsprechendes Modell zur Beeinflussung des Schaltprogramms.

Grundsätzlich ist zu beachten, dass eine lediglich einen extrem kurzen Zeitraum abdeckende Momentaufnahme des externen Fahrwiderstandes nur von sehr begrenzter Aussagekraft ist, da es nicht praktikabel ist, das Schaltprogramm es automatisierten Getriebes im Abstand von einigen Sekunden oder gar Zehntelsekunden zu wechseln oder zu verändern. Zudem können sich bei einer zu kurzeitigen Betrachtung singuläre Ereignisse, wie etwa ein hohes Anlaufmoment eines Aggregates oder eine starke Windböe, stark bemerkbar machen. Andererseits soll das Gesamtsystem ausreichend schnell reagieren, um beispielsweise bei einer Fahrt aus einer Ebene auf einen Berg nicht an der ersten stärkeren Steigung in einen ungeeigneten Fahrgang zu schalten oder im umgekehrten Fall unnötig lange in der Ebene in einem Modus zu fahren, bei dem erst relativ spät ein Hochschaltvorgang eingeleitet wird.

Es ist daher vorgesehen, dass die Fahrwiderstanderkennungseinrichtung ein Mittlungsmodul umfasst, welches die aktuellen Werte des Fahrwiderstandes über eine vorbestimmte Zeit auswertet und einen mittleren Fahrwiderstand ermittelt. Die Art und Auslegung des Mittlungsmoduls kann dabei auf unterschiedliche Weise geschehen. Es können sowohl einzelne Eingangswerte der Fahrwiderstanderkennungseinrichtung zeitlich gemittelt werden, als auch das Ergebnis des externen Fährwiderstands. Zudem kann über unterschiedlich lange Zeiträume und mit unterschiedlichen Gewichtungen gemittelt werden.

Eine besonders einfache Lösung ergibt sich, insbesondere bei analogen Eingangswerten, wenn das Mittlungsmodul den mittleren Fahrwiderstand durch eine zeitliche Filterung der aktuellen Werte des Fahrwiderstandes oder dessen zugrunde liegende Eingangsdaten ermittelt.

Ein besonders gut auf verschiedene Randbedingungen abstimmbares Mittlungsmodul erhält man dagegen dann, wenn der mittlere Fahrwiderstand oder auch dessen zugrunde liegende Eingangsdaten durch eine Aufbereitung der aktuellen Werte des Fahnrviderstandes oder der Eingangsdaten mittels- mathematisch-statistischer Verfahren ermittelt werden.

Besonders vorteilhaft ist es, wenn das Mittlungsmodul über zumindest zwei alternative Möglichkeiten zur Ermittlung des mittleren Fahrwiderstandes verfügt und zudem ein Wahlelement vorgesehen ist, das von diesen alternativen Möglichkeiten durch manuelle oder automatische Betätigung jeweils eine Möglichkeit auswählt. So können beispielsweise zwei unterschiedliche Zeitkonstanten alternativ vorgesehen sein, von denen eine kurze Zeitkonstante für eine schnelle und genaue Adaption des Schaltprogramms auch bei sich schnell verändernden Bedingungen sorgt, während eine längere Zeitkonstante eine allmähliche Anpassung des Schaltprogramms bewirkt und so unerwünschte Schwankungen im Schaltverhalten vermeidet.

Zumeist ist es ausreichend, wenn zum Beispiel dem Fahrer über beispielsweise einen Schalter oder Taster am Armaturenbrett eine Auswahlmöglichkeit gegeben wird, die es ihm etwa erlaubt, beim Befahren einer steilen Rampe oder am Fuße einer steilen Passstrasse durch Betätigung des Schalters oder Tasters für eine schnelle Adaptierung des Schaltprogramms an die aktuellen Bedingungen zu sorgen, während er ansonsten im Wesentlichen keine Veränderungen im Schaltverhalten wahrnimmt, da die Änderungen sehr langsam vorgenommen werden.

Das bisher vorgestellte Verfahren lässt sich für unterschiedliche Ziele und Zwecke einsetzen. Insbesondere kann die Fahrwiderstanderkennungseinrichtung das Schaltprogramm auf Grundlage des aktuellen oder des mittleren Fahrwiderstandes in der Art beeinflussen, dass zumindest ein Schaltpunkt für einen Hochschaltvorgang mit zunehmendem externem Fahrwiderstand angehoben wird. Dies entspricht dem Ziel, bei starken Steigungen, in bergigem Gelände, bei extremem Gegenwind und/oder bei erheblicher Anhängelast das Schaltprogramm so zu modifizieren, dass die einzelnen Gänge weiter ausgefahren werden, also jeweils später in den nächst höheren Gang geschaltet wird.

Eine weitere sinnvolle Anwendung ergibt sich dann, wenn die Fahrwiderstanderkennungseinrichtung zumindest im Volllastbereich des Antriebsmotors allein oder zusätzlich für den nächst höheren Fahrgang das nach einem Hochschalten im Antriebsstrang verfügbare Antriebsmoment abschätzt oder berechnet, und die über dem aktuellen Fahrgang liegenden Gänge dann sperrt, wenn dieses nach einem Wechsel in einen höheren Gang bei ansonsten gleich bleibenden Bedingungen nicht für eine ausreichende Beschleunigung des Fahrzeugs genügen würde.

Diese Abschätzung ist vor dem Hintergrund der bereits vorgestellten Ausprägungen des Verfahrens leicht dadurch zu erreichen, dass die jeweils im Voraus bekannten Unterschiede in der Übersetzung bei einem Gangwechsel dazu verwendet werden, auf Grundlage ansonsten gleicher Bedingungen die nach einem Gangwechsel anliegende Motordrehzahl und das sich ergebend Motormoment zu ermitteln. Mit Hilfe dieser zusätzlichen Werte kann die Fahrwiderstanderkennungseinrichtung leicht abschätzen, ob der Antriebsmotor nach einem entsprechenden Gangwechsel in der Lage wäre, das Fahrzeug weiter zu beschleunigen. Ein vom Fahrer als unangenehmer Schaltfehler empfundenes Schaltpendeln kann so sicher vermieden werden.

Selbstverständlich können auch hier weitere Parameter mit berücksichtigt werden. So kann etwa die Pedalbewegung des Fahrpedals überwacht werden, um frühzeitig zu erkennen, wenn der Fahrer aus dem Volllastbereich mit gewünschter Beschleunigung in einen Fahrbereich wechselt, in dem er lediglich die Geschwindigkeit zu halten wünscht. Auch kann je nach Lage des Referenzpunktes berücksichtigt werden, dass sich bestimmte Leistungssenken beispielsweise vor beziehungsweise hinter dem Getriebe befinden und dementsprechend in unterschiedlichem Maße auf einen Gangwechsel mit einer geänderten Leistungsaufnahme reagieren.

Welcher Bereich des Betriebs des Antriebsmotors dabei jeweils als Volllastbereich definiert wird, hängt weitgehend von den Motorkennlinien ab. In erster Näherung wird jedoch für den vorgestellten Zweck ein Leistungsbereich ab ca. 85 % der maximalen Leistung des Motors bei der jeweiligen aktuellen beziehungsweise nach einem Wechsel des Fahrganges sich einstellenden Drehzahl des Antriebsmotors als Volllastbereich angesehen.

Schließlich kann die Fahrwiderstanderkennungseinrichtung auf Grundlage des ermittelten Fahrwiderstandes und insbesondere auf Grundlage einer ermittelten Steigung des Untergrundes ab einem fest vorgegebenen oder adaptierbarem ersten Grenzwert bestimmte Getriebefunktionalitäten, wie eine NBS(Neutral-Bei-Stillstand)-Schaltung der Getriebesteuerung, in oder außer Funktion setzen, und unterhalb eines vorgegebenen oder adaptierten zweiten Grenzwertes wieder außer oder in Funktion setzen. Hierbei ist es selbstverständlich sinnvoll, wenn der ersten Grenzwerte für die Außerfunktionssetzung der NBS-Schaltung eine größere Steigung beziehungsweise einen größeren externen Fahrwiderstand repräsentiert als der zweite Grenzwert zur Wiederinbetriebsetzung.

An dieser Stelle wird der Nutzen einer gesonderten Erfassung beziehungsweise Ermittlung des Einflusses der Steigung und weiterer Einflussgrößen besonders deutlich, da beispielsweise das Vorhandensein eines beladenen Anhängers in der Ebene keine Außerkraftsetzung der Neutralschaltung bei Stillstand erfordert, eine starke Steigung jedoch ansonsten leicht zu einem Rückwärts-Rollen des Fahrzeugs führen kann.

Bei Bedarf können die Grenzwerte für die An- und Abschaltung der NBS-Schaltung beispielsweise vom Fahrer mittels eines Potentiometers oder anderer Eingabemittel gewählt werden. So können erfahrene Fahrer beispielsweise bei Einparkvorgängen an leichten Steigungen bewusst mit dem Zurückrollen des Fahrzeugs arbeiten, während unerfahrene Fahrer ein Zurückrollen sicher verhindern können. Es sei abschließend bemerkt, dass es selbstverständlich im Rahmen dieser Erfindung keinen Unterschied macht, ob die NBS-Funktion in die Fahrwiderstanderkennungseinrichtung integriert, Teil der Getriebesteuerung oder ein eigenständiges Modul ist.

Die Erfindung lässt sich anhand eines Ausführungsbeispiels weiter erläutern:

Ein erfindungsgemäß ausgerüsteter Personenkraftwagen mit einem automatisierten Schaltgetriebe fährt in ebenem Gelände und nähert sich dem Fuß eines Berges. Die Fahrwiderstanderkennungseinrichtung erhält ständig Daten von der Motorsteuerung über Drehzahl und Drehmoment des Antriebsmotors sowie über die Geschwindigkeit des Fahrzeugs. Mit Hilfe weiterer bekannter Größen, wie dem aktuell eingelegten Fahrgang und einer tabellarisch hinterlegten, temperaturbezogenen Abschätzung von Reibungsverlusten zwischen der Ausgangswelle des Antriebsmotors und den angetriebenen Rädern, rechnet die Fahrwiderstanderkennungseinrichtung diese Werte auf einen fiktiven Referenzpunkt an den angetriebenen Rädern des Fahrzeugs um. Dabei wird weiter ein Signal über den Betriebszustand der Klimaanlage ausgewertet und so die an den Rädern tatsächlich zur Verfügung stehende Zugkraft recht genau ermittelt. Weiter wird die Fahrzeuggeschwindigkeit von der Fahrwiderstanderkennungseinrichtung eingelesen und daraus die Beschleunigung des Fahrzeugs ermittelt.

Aus dem zeitlichen Profil der ermittelten Zugkraft an den Rädern und den ebenfalls bekannten zeitlichen Profilen der Fahrzeuggeschwindigkeit und Fahrzeugbeschleunigung erkennt die Fahrwiderstanderkennungseinrichtung, dass das Fahrzeug bis zu seinem maximal zulässigen Gesamtgewicht beladen ist.

Der Rollwiderstand wird über eine einfache Look-Up-Tabelle in Abhängigkeit von der Beladung und der Geschwindigkeit abgeschätzt und ebenfalls gesondert erfasst. Die Fahrwiderstanderkennungseinrichtung ist auf Grundlage der bekannten vorgenannten Daten in der Lage, recht genau aus dem Beschleunigungsverhalten des Fahrzeugs auf die aktuell befahrene Steigung zu schließen, ohne dass hierzu eine Positionsbestimmung des Fahrzeugs, gesonderte Neigungssensoren oder Straßenkarteninformationen notwendig wären.

Die vom Fahrzeug befahrene Strecke wird nun zunächst langsam steiler, woraufhin die Fahrwiderstanderkennungseinrichtung eine Vergrößerung des externen Fahrwiderstandes feststellt und mittels eines relativ langsamen Adaptionsprozesses mit zunehmender Zeit in leicht ansteigendem Gelände die Getriebesteuerung so adaptiert, dass bei Beschleunigungsvorgängen die einzelnen Gänge zu höheren Drehzahlen ausgefahren werden. Dieser Adaptionsvorgang geschieht für den Fahrer fast unmerklich.

Am Fuß einer ersten starken Steigung schaltet das Fahrzeug bei einer bestimmten Geschwindigkeit in den nächst höheren Gang. Der Fahrer empfindet die in diesem Gang mögliche Beschleunigung jedoch als nicht ausreichend. Er betätigt daher einen Taster am Armaturenbrett, welcher die Zeitkonstante der Fahrwiderstanderkennungseinrichtung für die Adaption des Schaltprogramms auf einen deutlich niedrigeren Wert setzt und so für eine schnelle Adaption des Schaltprogramms an die jetzt recht große Steigung sorgt.

Außerdem kontrolliert die Fahrwiderstanderkennungseinrichtung bei Fahrtzuständen im Volllastbereich, also ab 85 % der möglichen Leistungsabgabe des Antriebsmotors bezogen auf die jeweilige Motordrehzahl, kontinuierlich die mögliche abzugebende oder an den Rädern bereitstellbare Leistung des Antriebsmotors im jeweils nächst höheren Gang. Dies ist mit Hilfe der bekannten Übersetzungsverhältnisse des Getriebes und der bekannten Geschwindigkeit des Fahrzeugs durch einfaches Auslesen aus einem Kennfeld mit ausreichender Genauigkeit möglich. Sofern nach einem Gangwechsel die mögliche Beschleunigung unter der momentanen Beschleunigung liegen würde, verhindert die Fahrwiderstanderkennungseinrichtung einen Gangwechsel in einen höheren Gang.

Schließlich schaltet die Fahrwiderstanderkennungseinrichtung für denjenigen Zeitraum, in dem eine Steigung der Straße von mehr als 5 % ermittelt wird, ein Modul ab, welches bei Stillstand des Fahrzeugs normalerweise dafür sorgt, dass das Getriebe in seine Neutralstellung geschaltet wird.

## Patentansprüche

1. Verfahren zur Beeinflussung eines automatisierten Schaltgetriebes eines Kraftfahrzeugs, mit einer Fahrwiderstanderkennungseinrichtung, welche einen externen Fahrwiderstand des Fahrzeugs ermittelt und in Abhängigkeit von diesem externen Fahrwiderstand ein Schaltprogramm des automatisierten Schaltgetriebes durch Aktivierung und/oder Adaptierung und/oder Variierung beeinflusst, wobei die Fahrwiderstanderkennungseinrichtung Daten einliest, welche zumindest Informationen über ein Antriebsmoment im Antriebsstrang, über eine zugehörige Drehzahl und über eine Beschleunigung des Fahrzeugs beinhalten, und mit Hilfe der eingelesenen Daten über das Antriebmoment sowie die Beschleunigung auf den externen Fahrwiderstand des Fahrzeugs schließt, und die weiter aufgrund der aktuellen oder statistisch aufbereiten Daten über den externen Fahrwiderstand des Fahrzeugs das Schaltprogramm des automatisierten Schaltgetriebes durch Aktivierung und/oder Adaptierung und/oder Variierung beeinflusst, **dadurch gekennzeichnet, dass** die Fahrwiderstanderkennungseinrichtung ein Mittlungsmodul umfasst, welches die aktuellen Werte des Fahrwiderstandes über eine vorbestimmte Zeit auswertet und einen mittleren Fahrwiderstand ermittelt, wobei das Mittlungsmodul über zumindest zwei alternative Möglichkeiten zur Ermittlung des mittleren Fahrwiderstandes verfügt, und dass ein Wählelement vorgesehen ist, das von diesen alternativen Möglichkeiten durch manuelle oder automatische Betätigung jeweils eine Möglichkeit auswählt.

2. Verfahren nach Anspruch 1, **dadurch gekennzeichnet, dass** die Fahrwiderstanderkennungseinrichtung den externen Fahrwiderstand unter Berücksichtigung zusätzlicher Parameter ermittelt.

3. Verfahren nach Anspruch 2, **dadurch gekennzeichnet, dass** die Fahrwiderstanderkennungseinrichtung den externen Fahrwiderstand unter Berücksichtigung des Rollwiderstandes des Fahrzeugs ermittelt.

4. Verfahren nach Anspruch 2 oder 3, **dadurch gekennzeichnet, dass** die Fahrwiderstanderkennungseinrichtung den externen Fahrwiderstand unter Berücksichtigung des Luftwiderstandes des Fahrzeugs ermittelt.

5. Verfahren nach zumindest einem der Ansprüche 2 bis 4, **dadurch gekennzeichnet, dass** die Fahrwiderstanderkennungseinrichtung den externen Fahrwiderstand unter Berücksichtigung eines angenommenen mittleren Gesamtgewichtes des Fahrzeugs ermittelt.

6. Verfahren nach zumindest einem der Ansprüche 2 bis 4, **dadurch gekennzeichnet, dass** die Fahrwiderstanderkennungseinrichtung den externen Fahrwiderstand unter Berücksichtigung des tatsächlichen Gesamtgewichtes des Fahrzeugs ermittelt.

7. Verfahren nach zumindest einem der Ansprüche 2 bis 6, **dadurch gekennzeichnet, dass** die Fahrwiderstanderkennungseinrichtung den externen Fahrwiderstand unter Berücksichtigung von internen Widerständen ermittelt, welche ein tatsächlich an den Rädern des Fahrzeugs anliegendes Antriebsmoment gegenüber dem aufgrund der eingelesenen Informationen über das Antriebsmoment im Antriebsstrang zu erwartenden Antriebsmoment verringern.

8. Verfahren nach Anspruch 7, **dadurch gekennzeichnet, dass** die Fahrwiderstanderkennungseinrichtung eine durch den Betrieb von Zusatzaggregate bedingte Verringerung des tatsächlich an den Rädern des Fahrzeugs anliegenden Antriebsmomentes berücksichtigt.

9. Verfahren nach zumindest einem der Ansprüche 7 oder 8, **dadurch gekennzeichnet, dass** die Fahrwiderstanderkennungseinrichtung die durch einen automatischen und/oder manuellen Bremseingriff bedingte Verringerung des tatsächlich an den Rädern des Fahrzeugs anliegenden Antriebsmomentes berücksichtigt.

10. Verfahren nach Anspruch 1, **dadurch gekennzeichnet, dass** das Mittlungsmodul den mittleren Fahrwiderstand durch eine zeitliche Filterung der aktuellen Werte des Fahrwiderstandes ermittelt.

11. Verfahren nach zumindest einem der Ansprüche 1 oder 10, **dadurch gekennzeichnet, dass** das Mittlungsmodul den mittleren Fahrwiderstand durch eine Aufbereitung der aktuellen Werte des Fahrwiderstandes mittels mathematisch-statistischer Verfahren ermittelt.

12. Verfahren nach zumindest einem der vorhergehenden Ansprüche, **dadurch gekennzeichnet, dass** die Fahrwiderstanderkennungseinrichtung das Schaltprogramm auf Grundlage des aktuellen oder des mittleren Fahrwiderstandes in der Art beeinflusst, dass zumindest ein Schaltpunkt für einen Hochschaltvorgang mit zunehmendem externen Fahrwiderstand angehoben wird.

13. Verfahren nach zumindest einem der Ansprüche 1 bis 11, **dadurch gekennzeichnet, dass** die Fahrwiderstanderkennungseinrichtung zumindest im Volllastbereich des Antriebsmotors zusätzlich für den nächst höheren Fahrgang das nach einem Hochschalten im Antriebsstrang verfügbare Antriebsmoment abschätzt oder berechnet, und die über dem aktuellen Fahrgang liegenden Gänge dann sperrt, wenn dieses nach einem Wechsel in einen höheren Gang bei ansonsten gleich bleibenden Bedingungen nicht für eine ausreichende Beschleunigung des Fahrzeugs genügen würde.

14. Verfahren nach zumindest einem der vorhergehenden Ansprüche, **dadurch gekennzeichnet, dass** die Fahrwiderstanderkennungseinrichtung auf Grundlage des ermittelten Fahrwiderstandes und insbesondere auf Grundlage einer ermittelten Steigung des Untergrundes ab einem vorgegebenen oder adaptierbarem ersten Grenzwert eine NBS (Neutral-Bei-Stillstand)-Schaltung der Getriebesteuerung außer Funktion setzt, und unterhalb eines vorgegebenen oder adaptierten zweiten Grenzwertes wieder in Funktion setzt.

## Claims

1. Method for influencing an automatic gearbox of a motor vehicle, with a tractive resistance detection device which determines an external driving state of the vehicle, and which influences a gearshift program of the automated gearbox as a function of this external tractive resistance by activation and/or adaptation and/or variation, wherein the tractive resistance detection device reads in data which include at least information about a driving torque in the drive train, about an associated rotational speed and about an acceleration of the vehicle, and infers the external tractive resistance of the vehicle using the read-in data relating to the drive torque and the acceleration, and which also influences the gearshift program of the automated gearbox on the basis of the current or statistically conditioned data relating to the external tractive resistance of the vehicle by activation and/or adaptation and/or variation, **characterized in that** the tractive resistance detection device comprises an averaging module which evaluates the current values of the tractive resistance over a predetermined time and determines an average tractive resistance, wherein the averaging module has at least two alternative possibilities for the determination of the average tractive resistance, and **in that** a selector element is provided which respectively selects a possibility from these alternative possibilities by manual or automatic activation.

2. Method according to Claim 1, **characterized in that** the tractive resistance detection device determines the external tractive resistance by taking into account additional parameters.

3. Method according to Claim 2, **characterized in that** the tractive resistance detection device determines the external tractive resistance by taking into account the rolling resistance of the vehicle.

4. Method according to Claim 2 or 3, **characterized in that** the tractive resistance detection device determines the external tractive resistance by taking into account the air resistance of the vehicle.

5. Method according to at least one of Claims 2 to 4, **characterized in that** the tractive resistance detection device determines the external tractive resistance by taking into account an assumed average overall weight of the vehicle.

6. Method according to at least one of Claims 2 to 4, **characterized in that** the tractive resistance detection device determines the external tractive resistance by taking into account the actual overall weight of the vehicle.

7. Method according to at least one of Claims 2 to 6, **characterized in that** the tractive resistance detection device determines the external tractive resistance by taking into account internal resistances which reduce drive torque, which is actually present at the wheels of the vehicle, with respect to the drive torque which is expected owing to the read-in information relating to the drive torque in the drive train.

8. Method according to Claim 7, **characterized in that** the tractive resistance detection device takes into account a reduction, brought about by the operation of accessory units, in the drive torque which is actually present at the wheels of the vehicle.

9. Method according to at least one of Claims 7 or 8, **characterized in that** the tractive resistance detection device takes into account the reduction, brought about by an automatic and/or manual braking intervention, in the drive torque which is actually present at the wheels of the vehicle.

10. Method according to Claim 1, **characterized in that** the averaging module determines the average tractive resistance by filtering the current values of the tractive resistance over time.

11. Method according to at least one of Claims 1 or 10, **characterized in that** the averaging module determines the average tractive resistance by conditioning the current values of the tractive resistance by means of mathematical-statistical methods.

12. Method according to at least one of the preceding claims, **characterized in that** the tractive resistance detection device influences the gearshift program on the basis of the current tractive resistance or the average tractive resistance, in such a way that at least one shift point for a shift-up process is raised as the external tractive resistance increases.

13. Method according to at least one of Claims 1 to 11, **characterized in that**, at least in the full load range of the drive motor, the tractive resistance detection device additionally estimates or calculates for the next highest gear position, the torque which is available after a shift-up process in the drive train, and then locks the gear speeds above the current gear position if, after a change into a higher gear speed, said drive torque would not be sufficient for adequate acceleration of the vehicle given conditions which otherwise stay the same.

14. Method according to at least one of the preceding claims, **characterized in that**, on the basis of the determined tractive resistance and in particular on the basis of a determined gradient of the underlying surface, the tractive resistance detection device deactivates, starting from a predefined or adaptable first limiting value, an NIS (Neutral in Stationary State) circuit of the gearbox controller, and reactivates it again below a predefined or adapted second limiting value.

## Revendications

1. Procédé pour influencer une boîte de vitesses automatisée d'un véhicule automobile, comprenant un dispositif de détection de la résistance au déplacement qui détermine une résistance au déplacement externe du véhicule et, en fonction de cette résistance au déplacement externe, influence un programme de changement de rapport de la boîte de vitesses automatisée par activation et/ou adaptation et/ou variation, le dispositif de détection de la résistance au déplacement chargeant des données qui contiennent au moins des informations sur un couple d'entraînement dans la chaîne motrice, sur une vitesse de rotation associée et sur une accélération du véhicule et déduisant la résistance au déplacement externe du véhicule à l'aide des données chargées sur le couple d'entraînement et l'accélération, et qui influence en outre le programme de changement de rapport de la boîte de vitesses automatisée par activation et/ou adaptation et/ou variation en se basant sur les données actuelles ou conditionnées statistiquement sur la résistance au déplacement externe du véhicule, **caractérisé en ce que** le dispositif de détection de la résistance au déplacement comprend un module de calcul de la moyenne qui évalue les valeurs actuelles de la résistance au déplacement sur une période prédéfinie et détermine une résistance au déplacement moyenne, le module de calcul de la moyenne disposant d'au moins deux possibilités alternatives pour déterminer la résistance au déplacement moyenne, et qu'il est prévu un élément de sélection qui, par actionnement manuel ou automatique, sélectionne à chaque fois une possibilité parmi ces possibilités alternatives.

2. Procédé selon la revendication 1, **caractérisé en ce que** le dispositif de détection de la résistance au déplacement détermine la résistance au déplacement externe en tenant compte de paramètres supplémentaires.

3. Procédé selon la revendication 2, **caractérisé en ce que** le dispositif de détection de la résistance au déplacement détermine la résistance au déplacement externe en tenant compte de la résistance au roulement du véhicule.

4. Procédé selon la revendication 2 ou 3, **caractérisé en ce que** le dispositif de détection de la résistance au déplacement détermine la résistance au déplacement externe en tenant compte de la traînée aérodynamique du véhicule.

5. Procédé selon au moins l'une des revendications 2 à 4, **caractérisé en ce que** le dispositif de détection de la résistance au déplacement détermine la résistance au déplacement externe en tenant compte d'un poids total moyen supposé du véhicule.

6. Procédé selon au moins l'une des revendications 2 à 4, **caractérisé en ce que** le dispositif de détection de la résistance au déplacement détermine la résistance au déplacement externe en tenant compte du poids total effectif du véhicule.

7. Procédé selon au moins l'une des revendications 2 à 6, **caractérisé en ce que** le dispositif de détection de la résistance au déplacement détermine la résistance au déplacement externe en tenant compte de résistances internes qui réduisent un couple d'entraînement effectivement appliqué aux roues du véhicule par rapport au couple d'entraînement attendu du fait des informations chargées sur le couple d'entraînement dans la chaîne motrice.

8. Procédé selon la revendication 7, **caractérisé en ce que** le dispositif de détection de la résistance au déplacement tient compte d'une réduction du couple d'entraînement effectivement appliqué aux roues du véhicule liée au fonctionnement de groupes supplémentaires.

9. Procédé selon au moins l'une des revendications 7 ou 8, **caractérisé en ce que** le dispositif de détection de la résistance au déplacement tient compte de la réduction du couple d'entraînement effectivement appliqué aux roues du véhicule liée à une intervention de freinage automatique et/ou manuelle.

10. Procédé selon la revendication 1, **caractérisé en ce que** le module de calcul de la moyenne détermine la résistance au déplacement moyenne par un filtrage dans le temps des valeurs actuelles de la résistance au déplacement.

11. Procédé selon au moins l'une des revendications 1 ou 10, **caractérisé en ce que** le module de calcul de la moyenne détermine la résistance au déplacement moyenne par un conditionnement des valeurs actuelles de la résistance au déplacement au moyen d'un procédé mathématique-statistique.

12. Procédé selon au moins l'une des revendications précédentes, **caractérisé en ce que** le dispositif de détection de la résistance au déplacement influence le programme de changement de rapport en se basant sur la résistance au déplacement actuelle ou moyenne, **en ce qu'**au moins un point de commutation pour une opération de passage au rapport supérieur est relevé à mesure que la résistance au déplacement externe augmente.

13. Procédé selon au moins l'une des revendications 1 à 11, **caractérisé en ce que** le dispositif de détection de la résistance au déplacement évalue ou calcule, au moins dans la plage de pleine charge du moteur d'entraînement et en complément pour le rapport de déplacement immédiatement supérieur, le couple d'entraînement disponible dans la chaîne motrice après un passage au rapport supérieur et bloque alors les rapports qui se trouvent au-dessus du rapport de déplacement actuel lorsque ledit couple serait insuffisant pour une accélération suffisante du véhicule après un passage à un rapport supérieur avec des conditions au demeurant qui restent identiques.

14. Procédé selon au moins l'une des revendications précédentes, **caractérisé en ce que** le dispositif de détection de la résistance au déplacement, en se basant sur la résistance au déplacement déterminée et notamment en se basant sur une pente déterminée du sous-sol, met hors fonction un passage au rapport NBS (neutre à l'arrêt) de la commande de boîte de vitesses à partir d'une première valeur limite prédéfinie ou adaptable et le remet en fonction au-dessous d'une deuxième valeur limite prédéfinie ou adaptée.
